(19) Europäisches Patentamt
European Patent Office
Office européen des brevets

(11) **EP 2 843 816 A1**

(12) **DEMANDE DE BREVET EUROPEEN**

(43) Date de publication:
**04.03.2015 Bulletin 2015/10**

(51) Int Cl.:
*H02M 1/00* *(2007.01)*       *H02M 3/335* *(2006.01)*
*H02J 9/06* *(2006.01)*

(21) Numéro de dépôt: **14181822.9**

(22) Date de dépôt: **21.08.2014**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**

(30) Priorité: **27.08.2013 FR 1358197**

(71) Demandeur: **Airbus Operations
31060 Toulouse (FR)**

(72) Inventeurs:
- **Rieux-Lopez, Olivier
  81310 LISLE SUR TARN (FR)**
- **Davy, Arnaud
  31140 PECHBONNIEU (FR)**
- **Pinchon, Thibault
  31500 TOULOUSE (FR)**

(74) Mandataire: **Santarelli
49, avenue des Champs-Elysées
75008 Paris (FR)**

(54) **Alimentation à découpage à architecture modulable**

(57)    L'invention concerne un dispositif d'alimentation à découpage comportant un module de charge et de décharge d'une réserve d'énergie incluant un transformateur électrique. Le dispositif offre une grande flexibilité de configuration.

Figure 2

EP 2 843 816 A1

**Description**

La présente invention se rapporte aux alimentations à découpage.

Plus particulièrement, la présente invention concerne la protection des alimentations à découpage contre les microcoupures de tension à l'entrée de telles alimentations.

D'une manière générale, une alimentation à découpage reçoit en entrée une tension continue issue d'un réseau continu. Par extension, l'alimentation à découpage peut être alimentée par une tension continue résultant du redressement d'une tension alternative. Une alimentation à peut être soumises à une microcoupure lorsque qu'elle est privée de source d'énergie pendant un temps court. Afin de protéger l'alimentation contre les microcoupures et de lui permettre de continuer à fonctionner (c'est-à-dire continuer à fournir sa ou ses tension(s) de sortie) durant la microcoupure du réseau, des architectures de protection peuvent être mises en oeuvre.

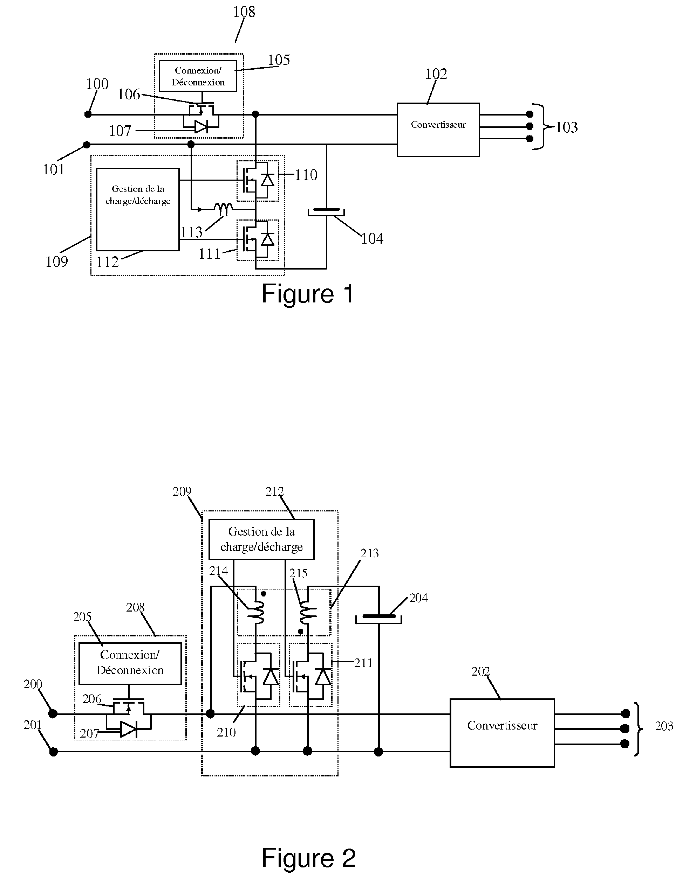

Le document FR 2 983 005 divulgue une architecture d'alimentation à découpage telle que représentée par le circuit de la **figure 1.**

Des bornes d'entrée 100, 101 reçoivent une tension continue d'entrée à convertir de la part d'un réseau électrique continu (ou un réseau alternatif redressé). Un module de conversion 102 (qui peut comporter une pluralité de convertisseurs) régule cette tension continue d'entrée et fournit sur des bornes de sortie 103 des tensions de sortie régulées. Afin de protéger l'alimentation à découpage, un module de réserve d'énergie 104 est connecté aux bornes du module de conversion.

Un circuit de commande 105 (par exemple une porte NON) commande un interrupteur 106 (par exemple un transistor MOSFET) connecté en parallèle avec une diode 107. L'ensemble des éléments 105, 106 et 107 fait partie d'un module 108 de connexion et de déconnexion de l'alimentation du réseau électrique fournissant la tension continue d'entrée.

Le module de stockage est chargé et déchargé par un module de charge et de décharge 109. Le module 109 comporte un circuit de type « *buck-boost* » (circuit de type « *inverseur* »).

Deux modules de commutation 110, 111 sont connectés en parallèle au module de réserve d'énergie. Chaque module de commutation comporte un interrupteur (par exemple un transistor MOSFET) connecté en parallèle à une diode. Les interrupteurs sont commandés par un module de gestion de charge et de décharge 112.

Le module 111 est connecté entre le module de stockage 104 et le module 110. Le module 110 est connecté entre le module 111 et le module de conversion 102.

Une inductance 113 est connectée entre la borne d'entrée 101 et le point de connexion des modules de commutation 110 et 111.

Le potentiel de la borne d'entrée 101, qui est commun au réseau électrique d'entrée, au module de charge et de décharge 109 et au module de réserve d'énergie 104 est pris comme référence. Ce noeud du circuit est ainsi pris comme masse (ou « *point froid* ») du circuit. Le point froid d'une alimentation électrique correspond à sa borne négative ou à la masse du circuit dont elle fait partie. Par opposition, le « point chaud » de l'alimentation correspond à sa borne positive.

Une architecture selon le document FR 2 983 005 permet d'avoir, lors d'une microcoupure, en entrée du module de conversion, une tension continue régulée pendant l'utilisation de la réserve d'énergie stockée dans le module de stockage, et ce, indépendamment de la tension aux bornes du module de stockage.

En outre, le module de conversion est en permanence connecté (via le module de charge et de décharge) à la réserve d'énergie. Le module de conversion n'est ainsi pas perturbé au début de la microcoupure, lorsqu'il cesse d'utiliser l'énergie du réseau pour commencer à utiliser celle du module de stockage. Il en est de même à la fin de la microcoupure.

Par ailleurs, le module de charge et de décharge ne génère des pertes significatives que pendant la durée de charge initiale du module de stockage et pendant la microcoupure.

L'architecture selon le document FR 2 983 005 offre ainsi déjà de nombreux avantages par rapport aux architectures de l'art antérieur que sont les structures séries et parallèles présentées dans ce même document.

Les inventeurs ont néanmoins développé cette architecture en y apportant des améliorations, notamment en offrant une grande liberté d'implémentation.

Un **premier aspect** de l'invention concerne un dispositif d'alimentation électrique à découpage pour réguler une tension continue d'entrée fournie entre deux bornes d'entrée du dispositif par un réseau électrique, ledit dispositif comportant :

- au moins un module de conversion pour convertir ladite tension continue d'entrée en tension continue régulée,
- un module de réserve d'énergie pour stocker de l'énergie électrique à restituer audit module de conversion en cas de coupure de ladite tension continue d'entrée, et
- un module de gestion pour gérer la charge et la décharge dudit module de réserve.

Le dispositif est caractérisé en ce qu'il comporte en outre un transformateur électrique, et en ce:

- qu'un circuit primaire connecté entre lesdites bornes d'entrée comporte un enroulement primaire dudit transformateur connecté en série avec un premier module de commutation commandé par ledit module de gestion, et
- qu'un circuit secondaire fermé comporte un enroulement secondaire connecté en série avec ledit module de réserve d'énergie et un deuxième module de commutation commandé par ledit module de gestion.

Un dispositif selon le premier aspect peut être utilisé dans un grand nombre de configurations. Il offre ainsi la possibilité de l'adapter à des situations diverses qui peuvent être rencontrées dans les systèmes d'alimentation dans lesquels un tel dispositif a vocation à être intégré.

En outre, un dispositif selon le premier aspect permet l'utilisation d'une tension de réserve (aux bornes du module de stockage d'énergie) et d'une tension de bus (à l'entrée du module de conversion) très différentes (la tension de bus peut par exemple être de 5V et la tension de réserve de 100V).

Ainsi, l'intégration d'un dispositif selon le premier aspect est facilitée, même dans les systèmes où la tension de réseau est très inférieure à la tension de réserve. Un dispositif selon le premier aspect atténue la contrainte de garder ces tensions proches.

Il est ainsi possible de choisir la technologie du module de stockage d'énergie, indépendamment des caractéristiques du réseau d'alimentation, notamment, la tension de bus.

Le rapport du nombre de spires des deux enroulements du transformateur fournit un degré de liberté supplémentaire pour l'optimisation du module de charge et de décharge ainsi que du module de stockage.

Un dispositif selon le premier aspect permet une régulation du module de charge et de décharge du module de stockage en mode courant. Les mesures de courant sont facilitées par l'utilisation du transformateur.

Dans une architecture d'un dispositif selon le premier aspect, la commande des modules de commutation est facilitée. Ces modules de commutation peuvent être référencés à des potentiels opportuns.

Il n'est pas nécessaire de gérer des potentiels négatifs. Il est par exemple possible d'effectuer des mesures de courant aisément avec deux shunts référencés à la masse, en série les modules de commutation (par exemple avec les sources de transistors de ces modules). Il est ainsi possible de mesurer positivement le courant dans la phase de fonctionnement où cette mesure est utile à déterminer l'instant d'ouverture du module de commutation.

Un dispositif selon le premier aspect peut être vu de l'extérieur de la même manière qu'un dispositif à topologie de type « *inverseur* ». Les évolutions des tensions de bus et de réserve sont les mêmes et le courant prélevé sur le réseau est le même. Ainsi, il est possible d'utiliser un dispositif selon le premier aspect en remplacement d'un dispositif « inverseur » de manière transparente.

Un dispositif selon le premier aspect peut par exemple mettre en oeuvre une topologie « *d'inverseur isolé* » ou « *flyback* ».

Par exemple, ledit circuit secondaire est fermé sur lui-même.

Ledit circuit secondaire peut être fermé sur l'une desdites bornes d'entrée.

Le dispositif peut en outre comporter un module de déconnexion pour déconnecter le dispositif dudit réseau électrique en cas de coupure de ladite tension continue d'entrée.

Par exemple, le module de déconnexion est connecté à une borne d'entrée différente de celle sur laquelle est refermé ledit circuit secondaire.

Par exemple encore, le module de déconnexion est connecté au point froid du dispositif.

Ledit circuit secondaire peut être fermé sur une borne de sortie dudit module de conversion fournissant ladite tension continue régulée.

Par exemple, au moins l'un desdits premier et deuxième modules de commutation a une borne de connexion connectée au point froid du dispositif.

Par exemple encore, au moins l'un desdits premier et deuxième modules de commutation a une borne de connexion connectée au point chaud du dispositif.

Selon des réalisations, les extrémités homologues desdits enroulements primaire et secondaire sont connectées à un potentiel non-soumis à découpage

Un **deuxième aspect** de l'invention concerne système d'alimentation électrique, notamment pour aéronef, comportant un dispositif selon le premier aspect.

D'autres caractéristiques et d'autres avantages de la présente invention apparaîtront à la lecture de la description non-limitative suivante, faite en référence aux figures suivantes parmi lesquelles, en outre la figure 1 :

- la **figure 2** illustre un circuit général selon des modes de réalisation,
- les **figures 3a-3d** illustrent d'autres circuits selon des modes de réalisation, et
- les **figures 4a-4b** illustrent la régulation d'un circuit selon des modes de réalisation.

Des modes de réalisation de l'invention sont décrits dans la suite à partir du schéma général de la **figure 2.**

Des bornes d'entrée 200, 201 reçoivent une tension continue d'entrée à convertir de la part d'un réseau électrique continu (ou un réseau alternatif redressé). Un module de conversion 202 (qui peut comporter une pluralité de convertisseurs) régule cette tension continue d'entrée et fournit sur des bornes de sortie 203 des tensions de sortie régulées. Afin de protéger l'alimentation à découpage, un module de réserve d'énergie 204 est connecté aux bornes du module de conversion.

Un circuit de commande 205 (par exemple une porte NON) commande un interrupteur 206 (par exemple un transistor MOSFET) connecté en parallèle avec une diode 207. L'ensemble des éléments 205, 206 et 207 fait partie d'un module 208 de connexion et de déconnexion de l'alimentation du réseau électrique fournissant la tension continue d'entrée.

Le module de stockage est chargé et déchargé par un module de charge et de décharge 209.

Ce module 209 comporte deux modules de commutation 210, 211 Par exemple, chaque module de commutation comporte un interrupteur (par exemple un transistor MOSFET) connecté en parallèle à une diode. Les interrupteurs sont commandés par un module de gestion de charge et de décharge 212. La commande des modules de commutation est simplifiée par leur référencement à la borne d'entrée dont le potentiel est pris comme masse du dispositif (ou « point froid »), par exemple ici la borne 201. Par exemple, la source d'un transistor MOSFET ou l'émetteur d'un transistor IGBT pouvant être utilisés comme interrupteur, est connectée à ce point froid.

Le module de charge et de décharge comporte en outre un transformateur 213 avec un enroulement primaire 214 et un enroulement secondaire 215.

L'enroulement primaire 214 est connecté en série avec le module de commutation 210 entre les bornes d'entrée 200 et 201, formant ainsi un circuit primaire. Par exemple, le module de commutation est connecté à la borne d'entrée dont le potentiel est pris comme masse du dispositif (ou « point froid »), par exemple ici la borne 201.

L'enroulement secondaire est connecté en série avec le module de commutation 211 et le module de réserve d'énergie 204, formant ainsi un circuit secondaire. Le circuit secondaire est par exemple fermé. Il est par exemple fermé sur la borne d'entrée dont le potentiel est pris comme masse du dispositif (ou « *point froid* »), par exemple ici la borne 201. Par exemple, l'enroulement secondaire est connecté entre le module de commutation 211 et le module de stockage 204.

Le circuit de la figure 2 repose sur une topologie d'inverseur isolé, de type « *flyback* ».

Les enroulements primaires et secondaires sont intégrés dans des circuits reliés entre eux (par le point froid). Ainsi, les courants capacitifs parasites, dus à la capacité parasite entre enroulements sont rebouclés au plus court (ils passent dans la connexion entre les deux enroulements, sans s'étendre dans le reste du circuit voire en dehors de celui-ci), et ne génèrent que peu de perturbations électromagnétiques. Il est donc possible d'avoir une capacité parasite relativement élevée, et donc de bobiner deux fils en main afin de limiter les inductances de fuite.

La tension de charge de la réserve d'énergie peut être choisie en fonction du rapport de transformation du transformateur. Toutefois, d'autres paramètres peuvent être utilisés, comme par exemple la technologie de condensateur, la densité de stockage, la sécurité des personnes, la technologie d'interrupteur ou autre. La topologie « *flyback* » permet d'obtenir différents ratios tension d'entrée sur tension de sortie, et ce, quel que soit le rapport de transformation.

Selon une première approche, le rapport de transformation peut être unitaire, c'est-à-dire que les deux enroulements du transformateur ont le même nombre de spires. Un tel rapport de transformation permet de faciliter la réalisation de l'inductance et d'en améliorer les caractéristiques, en particulier minimiser l'inductance de fuite. Le choix d'un rapport de transformation unitaire ne contraint pas très fortement la tension de charge du module de réserve d'énergie. Cependant, le rapport de transformation étant fixé, en fonction du ratio de tension entre la tension de réseau et la tension de charge du module d'énergie, le circuit peut être amené à fonctionner avec des rapports cycliques proches de 0 ou proches de 1.

Selon une deuxième approche, le rapport de transformation peut être choisi de manière à optimiser la plage de rapport cyclique du circuit à utiliser compte tenu de la tension de charge du module de réserve d'énergie choisie. Le rendement du module de charge et de décharge peut ainsi être optimisé.

Un dispositif d'alimentation à découpage selon le schéma de la figure 2 peut être mis en oeuvre selon plusieurs variantes. Notamment, la position du module de connexion et de déconnexion sur l'une ou l'autre des bornes d'entrée, l'arrangement du circuit primaire, l'arrangement du circuit secondaire, le référencement du circuit secondaire offrent des degrés de liberté d'implémentation.

D'autres degrés de liberté sont liés à l'isolement galvanique entre les enroulements primaire et secondaire.

Le dispositif selon l'invention offre une multitude d'implémentations qui permettent de le mettre en oeuvre dans des systèmes d'alimentations aux caractéristiques variées. Ainsi, le concepteur d'alimentation peut adapter le dispositif aux besoins spécifiques de son système. Dans la suite, des exemples de variantes de dispositif sont présentés avec quelques avantages. Les avantages présentés ne sont pas limités à un circuit. Certains avantages présentés pour un circuit peuvent s'appliquer à d'autres.

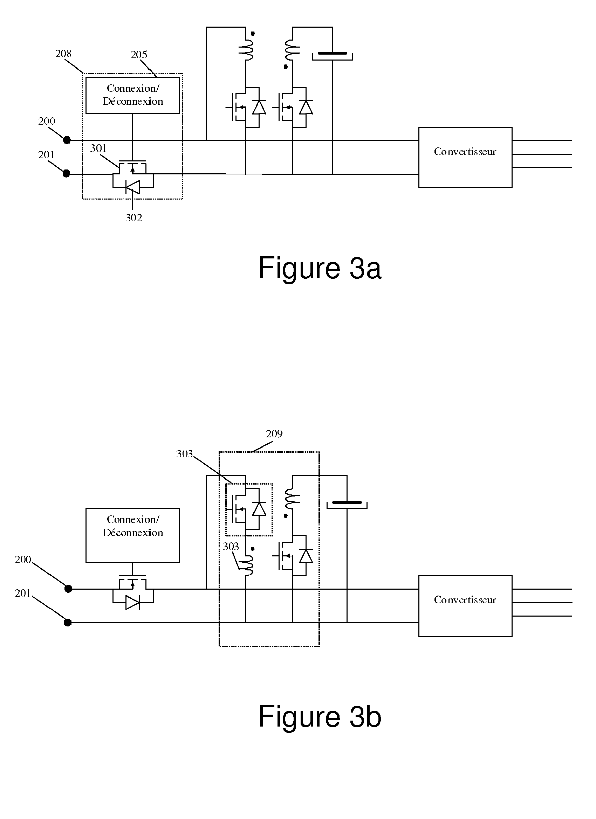

Les figures 3a à 3f sont des circuits simplifiés de dispositifs selon des modes de réalisation. En particulier, le module de gestion de charge et de décharge n'est pas représenté.

Dans le circuit de la **figure 3a**, le module 208 de connexion et de déconnexion est connecté à la borne 201 du dispositif correspondant au potentiel pris comme masse (« *point froid* » du dispositif).

Le module 208 comporte un interrupteur commandé 301 (par exemple un transistor MOSFET). L'interrupteur est commandé par le circuit de commande 205 connecté en parallèle à une diode. Par rapport au module 208 de la figure 2, le transistor 301 et la diode 302 sont connectés en sens inverse au transistor 206 et à la diode 207.

Lorsque l'interrupteur comporte un transistor MOSFET à canal N et que le module 208 est connecté au point froid, le transistor peut être commandé sans avoir à générer de potentiel plus élevé que celui du point chaud (potentiel de la borne 200).

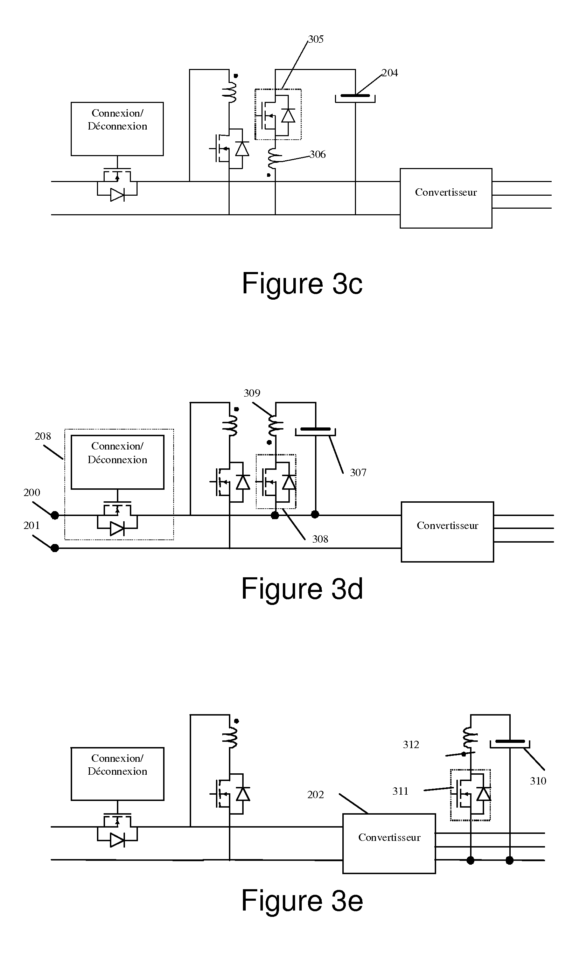

Dans le circuit de la **figure 3b**, le module de charge et de décharge 209 comporte, dans le circuit primaire, un module de commutation 303 et un enroulement primaire 304 dont l'ordre de connexion n'est pas le même que dans la figure 2. Dans le circuit de la figure 3b, c'est l'enroulement primaire qui est connecté au point froid du circuit.

Dans cette configuration, l'effet des capacités parasites des interrupteurs du module de commutation est réduit. Le drain (s'il s'agit d'un transistor MOSFET) ou le collecteur (s'il s'agit d'un transistor IGBT) de l'interrupteur est connecté à un potentiel non soumis à découpage.

En outre, le référencement des modules de commutation à des potentiels différents (le module 211 est référencé au point froid et pas le module 303) permet d'annuler l'effet des courants parasites dans le transformateur, en particulier dans un transformateur bobiné « deux fils en mains » et dans un transformateur à rapport de transformation unitaire.

Dans le circuit de la **figure 3c**, le module de charge et de décharge 209 comporte, dans le circuit secondaire, un module de commutation 305 et un enroulement secondaire 306 dont l'ordre de connexion n'est pas le même que dans la figure 2. Dans le circuit de la figure 3c, c'est le module de commutation 305 qui est connecté entre l'enroulement secondaire et le module de stockage 204.

La configuration du circuit de la figure 3c offre des avantages similaires à ceux du circuit de la figure 3b.

Dans le circuit de la **figure 3d**, le circuit secondaire n'est pas fermé sur le potentiel du point froid du circuit comme c'est le cas dans le circuit de la figure 2. Le module de stockage 307 et le module de commutation 308 du circuit de la figure 3d sont connectés en sortie du module 208 de connexion et de déconnexion. L'enroulement 309 du secondaire est connecté en série entre les deux.

Dans le circuit de la **figure 3e**, le circuit secondaire est fermé sur une borne de sortie du module convertisseur 202. Ainsi, le module de stockage 310 et le module de commutation 311 sont connectés à cette borne de sortie. L'enroulement secondaire 312 du transformateur est connecté en série entre les deux.

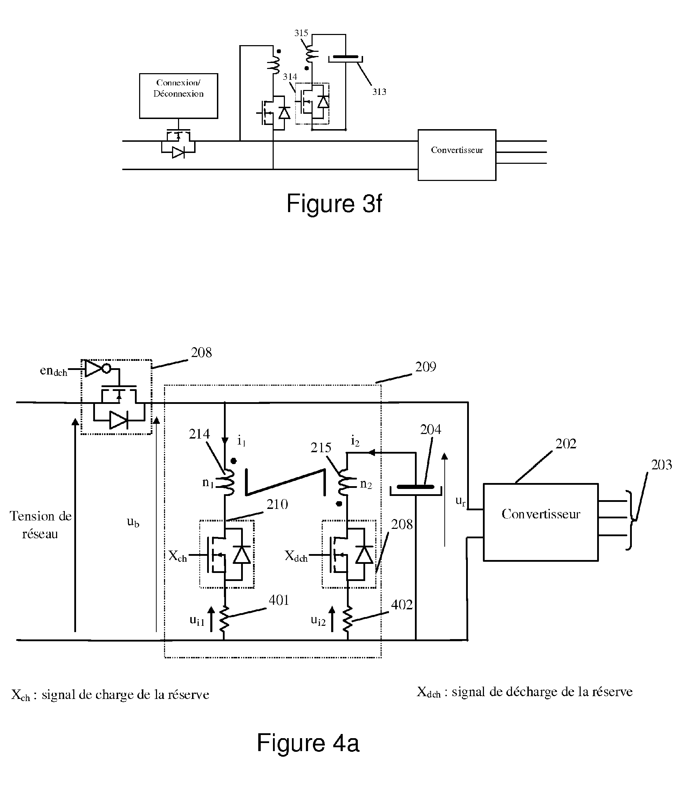

Dans le circuit de la **figure 3f**, le circuit secondaire, comportant, connectés en série, le module de stockage 313, le module de commutation 314 et l'enroulement secondaire 315 du transformateur, est fermé sur lui-même, sans être référencé à un potentiel du circuit. Le circuit secondaire n'est connecté à aucun point du circuit.

Les diverses variantes décrites ci-dessus offrent divers avantages. Ces avantages ne sont pas forcément exclusifs les uns des autres, ils peuvent être combinés dans un même circuit.

En particulier, dans les variantes où un interrupteur commandé à sa source (pour un MOSFET) ou son émetteur (pour un IGBT) connecté(e) au potentiel auquel est référencé la commande du circuit, cet interrupteur est plus simple à commander.

Lorsque le drain (pour un MOSFET) ou le collecteur (pour un IGBT) d'un interrupteur commandé est connecté à un potentiel non soumis au découpage (comme c'est le cas dans les circuits des figures 3b et 3c), il est possible de réduire les courants parasites liés aux capacités parasites habituellement présentes entre le drain ou le collecteur et l'environnement. En effet, le substrat de la puce constituant l'interrupteur est habituellement le drain ou le collecteur de celui-ci.

Lorsque les extrémités homologues des deux enroulements sont reliées toutes deux à un potentiel non-soumis au découpage (comme c'est le cas dans les circuits des figures 3b et 3c), la variation temporelle dv/dt de la tension entre spires homologues des deux enroulements peut être annulée. Ainsi, un bobinage « deux fils en main » peut être utilisé tout en ayant des courants capacitifs parasites extrêmement faibles. Le bobinage « deux fils en main » permet la minimisation de l'inductance de fuite et donc l'optimisation du fonctionnement, au prix d'une augmentation des capacités parasites entre primaire et secondaire, ce qui se traduit habituellement par une augmentation des courants capacitifs parasites.

Hormis la variante de la figure 3e, lorsque les convertisseurs du module de conversion présentent un isolement galvanique, les courants capacitifs parasites peuvent être rebouclés par des chemins filaires internes au dispositif. Ainsi, peu de perturbations électromagnétiques sont générées à l'extérieur du montage.

Après avoir présenté des architectures de circuit selon des modes de réalisation, la suite de la description détaille la régulation de ces circuits.

D'une manière générale, pour mesurer le courant dans le dispositif, il est possible d'utiliser une résistance shunt et/ou un transformateur de courant.

En particulier, il est possible de n'effectuer que des mesures de courant par résistance shunt référencée à la masse, comme illustré par le circuit de la **figure 4a.**

Un autre avantage est que ces résistances de shunt délivrent des tensions toujours positives. Cela permet d'une part de s'affranchir du besoin d'alimentation négative, et d'autre part d'envisager des implémentations dans lesquelles un seul comparateur de courant est utilisé.

La figure 4a reprend le circuit de la figure 2 avec les mêmes signes de référence. Deux résistances de shunt 401 et 402 sont ajoutées, connectées entre le point froid du circuit et, respectivement, les modules de commutation 210 et 208. Les modules de commutation 210 et 208 sont respectivement commandés par des signaux $X_{ch}$ de charge et $X_{dch}$ de décharge du module de réserve d'énergie.

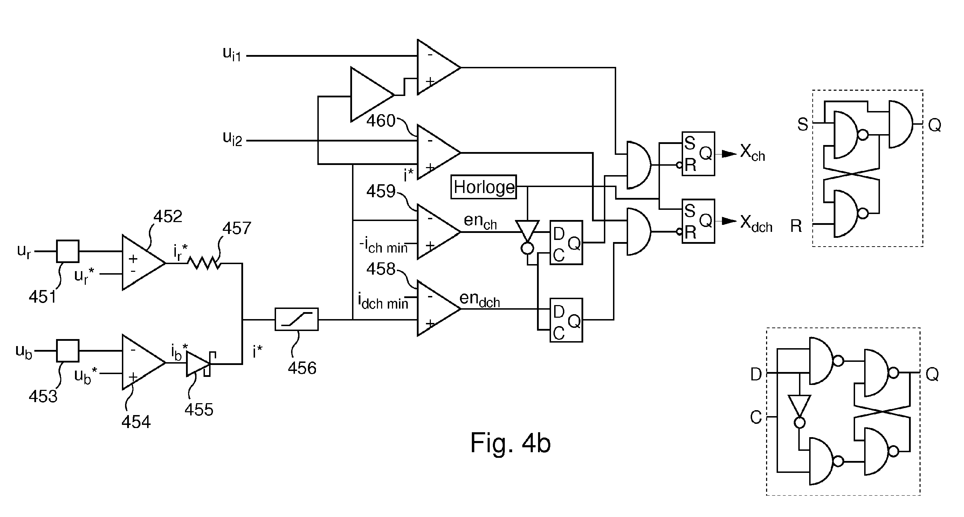

La stratégie de commande du circuit est décrite dans la suite, en référence à la **figure 4b** qui représente un circuit de commande pour la génération des signaux $X_{ch}$ et $X_{dch}$ de commande des modules de commutation 210 et 208.

La tension $u_r$* représente la consigne de la tension de réserve $u_r$ aux bornes du module de réserve d'énergie 204. La tension $u_b$* représente la consigne de la tension de bus $u_b$ aux bornes du module de conversion et du module de charge et de décharge 209.

La tension $u_r$ est fournie à un module de conditionnement 451 dont la sortie est comparée à la tension $u_r$* par un comparateur 452. De même, la tension $u_b$ est fournie à un module de conditionnement 453 dont la sortie est comparée à la tension $u_b$* par un comparateur 454. Les comparateurs appliquent des gains respectifs sur la comparaison de leurs signaux d'entrée.

La consigne de tension de réserve $u_r$* est choisie de manière à préserver le module de réserve d'énergie (comportant par exemple un condensateur), et à y stocker une énergie suffisante. La consigne de tension de bus $u_b$* est choisie à la valeur limite (de tension réseau) au-dessus de laquelle l'énergie du réseau est utilisée, et au-dessous de laquelle l'énergie de la réserve est utilisée.

Le fonctionnement du module de charge et de décharge est piloté par une unique grandeur de commande i*, qui est la consigne de courant dans l'enroulement 214 du circuit primaire, ce dernier étant défini par :

$$i = i_2 - (n_1/n_2) \times i_1$$

$n_1$ et $n_2$ étant les nombres de spires respectifs des deux enroulements primaire 214 et secondaire 215 du transformateur.

La consigne de courant est saturée en positif à la valeur $i_{max}$* et en négatif à la valeur $i_{min}$*.

Le courant $i_b$*, fourni en sortie du comparateur 454 représente la consigne de courant établie afin de réguler la tension de bus. Le courant $i_r$*, fourni en sortie du comparateur 452 représente la consigne de courant établie afin de réguler la tension de réserve.

La sortie du comparateur 454 est fournie à une diode Schottky 455. La consigne de courant i*, en sortie de la diode Schottky 455, est égale à celle des deux consignes $i_b$* et $i_r$* qui est algébriquement la plus grande (c'est-à-dire celle qui va le plus dans le sens d'un transfert d'énergie du module de réserve d'énergie vers le module de conversion.

En effet, si la tension de réserve est supérieure à la consigne ($i_r$*>0) et la tension de bus également ($i_b$*<0), il faut décharger la réserve (i*>0), et non le bus. De même, si la tension de réserve est inférieure à la consigne ($i_r$*<0) et la tension de bus également ($i_b$*>0), il faut décharger la réserve (i*>0), et non le bus.

La sortie du comparateur 452 est connectée à un module de limitation du courant 456, via une résistance 457. La sortie du comparateur 455 est aussi connectée au module de limitation de courante, elle via la diode Schottky 455.

L'association de la résistance 457 et de la diode 455 permet d'arbitrer entre les consignes de courant.

En fonction de l'amplitude et du signe du courant i*, le module de limitation de courant permet la charge ou la décharge du module de réserve d'énergie. La sortie du module 456 est fournie en entrée à trois comparateurs 458, 459, 460 et 461. La sortie du module 456 est fournie au comparateur 461 via un module de gain 462 dont la valeur de gain est fonction du rapport de transformation du transformateur : - $(n_1/n_2)$.

Les comparateurs 459 et 458 permettent d'éviter de commander intempestivement la charge et la décharge du module de stockage d'énergie. Ils permettent par ailleurs d'éviter une commande simultanée de la charge et de la décharge.

Ainsi, le comparateur 458 compare la sortie du module 456 à une valeur de courant de décharge minimale $i_{dch}$ pour fournir un signal $en_{dch}$ en sortie. Le comparateur 459 compare la sortie du module 456 à une valeur de courant de charge minimale $i_{ch}$ pour fournir un signal $en_{ch}$ en sortie. Ainsi, la charge et la décharge du module de stockage d'énergie ne sont commandées que lorsque le signal de sortie du module 456 est assez significatif.

Les signaux $en_{dch}$ et $en_{ch}$ sont fournis à une logique de synchronisation pour synchroniser les ordres de charge et de décharge du module de stockage d'énergie sur un signal d'horloge.

Le signal $en_{dch}$ est fourni en entrée à l'entrée D d'un premier verrou D 463. Le signal $en_{ch}$ est fourni en entrée à l'entrée D d'un autre verrou D 464. Les entrées C respectives des verrous 463 et 464 reçoivent un signal d'horloge d'une horloge 465 inversée per une porte inverseuse 466. La sortie Q du verrou 463 est fournie en entrée à une porte NAND 467 et la sortie Q du verrou 464 est fournie en entrée à une porte NAND 468. Les verrous D 463 et 464 sont classiques, un détail de leur câblage est représenté dans la fenêtre 469.

La commande des modules de commutation 208 et 210 dépend, entre des signaux de consigne $u_r$ et $u_b$, des mesures de courant dans les résistances de shunt 401 et 402.

Ainsi, le comparateur 460 compare la sortie du module de limitation de courant 456 à la tension $u_{i2}$ représentant le courant traversant la résistance de shunt 402 alors que le comparateur compare cette sortie, amplifiée par le gain ($- (n_1/n_2)$) du module de gain 462, à la tension $u_{i1}$ représentant le courant traversant la résistance de shunt 401. La sortie du comparateur 461 est fournie en entrée à la porte NAND 468 et la sortie du comparateur 460 est fournie en entrée à la porte NAND 467.

Les signaux de commande de charge $X_{ch}$ et de décharge $X_{dch}$ sont fournis par des bascules RS 469 et 470.

La bascule RS 469, qui délivre sur sa sortie Q le signal $X_{ch}$, reçoit sur son entrée R (reset) la sortie inversée de la porte NAND 468. Elle reçoit en outre sur son entrée S (set) le signal d'horloge de l'horloge 465. La bascule RS 470, qui délivre sur sa sortie Q le signal

X<sub>dch</sub>, reçoit sur son entrée R (reset) la sortie inversée de la porte NAND 467. Elle reçoit en outre sur son entrée S (set) le signal d'horloge de l'horloge 465. Les bascules RS 469 et 470 sont classiques, un détail de leur câblage est représenté dans la fenêtre 471.

Le montage de commande avec les bascules RS permet de commander les modules de commutation 208 et 210 en mode de contrôle par pic de courant (« *Peak Current Mode* »).

Ainsi, dans un mode de régulation, c'est la tension de bus qui est régulée et dans un autre mode de régulation, c'est la tension de réserve qui est régulée. Le passage d'un mode de régulation à l'autre est déterminé directement par les valeurs des consignes $i_b$*et $i_r$*.

Il existe un point de fonctionnement commun aux deux modes de régulation lorsque $i_b$* = $i_r$*.

Le passage d'un mode de régulation à l'autre n'est pas strictement équivalent au changement de signe de la consigne de courant i*.

Cette stratégie présente entre plusieurs avantages.

La construction de la consigne i* comme choix de la plus grande des deux consignes $i_b$* et $i_r$* assure que le passage d'un mode à l'autre (de i*=$i_b$* à i*=$i_r$* et vice-versa) n'introduit pas de discontinuité sur i*, donc pas de perturbation du système.

Cela permet en outre un fonctionnement sans oscillations à l'intersection des deux modes. En particulier, lorsque le réseau est très impédant et/ou le courant de charge très important, si le courant absorbé sur le réseau pour charger le module de réserve d'énergie fait chuter la tension réseau jusqu'au voisinage de $u_b$*, la régulation de tension de bus entre en jeu alors même que le module de réserve d'énergie est encore encours de chargement (sous un courant réduit), évitant ainsi un écroulement plus important du réseau ou d'éventuelles oscillations. Cette propriété permet de régler le courant de charge de la réserve (via $i_{min}$*) de façon à obtenir une charge très rapide lorsque le réseau est peu impédant, sans que cela pose de problème lorsque le réseau est très impédant.

L'existence de deux boucles de tension séparées permet un réglage différent selon les besoins. En effet, la présence de condensateurs de valeurs différentes sur les deux tensions à réguler peut exiger des gains différents.

Bien entendu, la présente invention ne se limite pas aux formes de réalisation décrites, d'autres variantes et combinaisons de caractéristiques sont possibles. Les différents composants décrits peuvent être substitués par un ou plusieurs autres composants configurés pour remplir les fonctions décrites pour chaque composant des circuits décrits ci-avants.

**Revendications**

**1.** Dispositif d'alimentation électrique à découpage pour réguler une tension continue d'entrée fournie entre deux bornes d'entrée (200, 201) du dispositif par un réseau électrique, ledit dispositif comportant :

- au moins un module de conversion (202) pour convertir ladite tension continue d'entrée en tension continue régulée,
- un module de réserve d'énergie (204) pour stocker de l'énergie électrique à restituer audit module de conversion en cas de coupure de ladite tension continue d'entrée,
- un module de gestion (212) pour gérer la charge et la décharge dudit module de réserve, **caractérisé en ce qu'**il comporte en outre un transformateur électrique (213), et **en ce:**
- **qu'**un circuit primaire connecté entre lesdites bornes d'entrée comporte un enroulement primaire (214) dudit transformateur connecté en série avec un premier module de commutation (210) commandé par ledit module de gestion, et
- qu'un circuit secondaire fermé comporte un enroulement secondaire (215) connecté en série avec ledit module de réserve d'énergie et un deuxième module de commutation (211) commandé par ledit module de gestion.

**2.** Dispositif selon la revendication 1, dans lequel ledit circuit secondaire est fermé sur lui-même.

**3.** Dispositif selon la revendication 1, dans lequel ledit circuit secondaire est fermé sur l'une desdites bornes d'entrée.

**4.** Dispositif selon l'une des revendications précédentes, comportant en outre un module de déconnexion (208) pour déconnecter le dispositif dudit réseau électrique en cas de coupure de ladite tension continue d'entrée.

**5.** Dispositif selon les revendications 3 et 4, dans lequel le module de déconnexion est connecté à une borne d'entrée différente de celle sur laquelle est refermé ledit circuit secondaire.

**6.** Dispositif selon l'une des revendications 4 et 5, dans lequel le module de déconnexion est connecté au point froid du dispositif.

**7.** Dispositif selon la revendication 1, dans lequel ledit circuit secondaire est fermé sur une borne de sortie dudit module de conversion fournissant ladite tension continue régulée.

**8.** Dispositif selon l'une des revendications précédentes, dans lequel au moins l'un desdits premier et deuxième modules de commutation a une borne de connexion connectée au point froid du dispositif.

**9.** Dispositif selon l'une des revendications précédentes, dans lequel au moins l'un desdits premier et deuxième modules de commutation a une borne de connexion connectée au point chaud du dispositif.

**10.** Dispositif selon l'une des revendications précédentes, dans lequel les extrémités homologues desdits enroulements primaire et secondaire sont connectées à un potentiel non-soumis à découpage.

Figure 1

Figure 2

Figure 3a

Figure 3b

Figure 3c

Figure 3d

Figure 3e

Figure 3f

$X_{ch}$ : signal de charge de la réserve          $X_{dch}$ : signal de décharge de la réserve

Figure 4a

Fig. 4b

Europäisches
Patentamt

European
Patent Office

Office européen
des brevets

# RAPPORT DE RECHERCHE EUROPEENNE

Numéro de la demande

EP 14 18 1822

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | S Giridharan: "A Novel Transformer-less Uninterruptible Power Supply", , 30 septembre 1996 (1996-09-30), XP055114396, Extrait de l'Internet: URL:http://www.peg.ee.iisc.ernet.in/people /faculty/vram/smpc/pdf/giridharan.pdf [extrait le 2014-04-16] * figure 1.2 * * figure 3.3 * * page 3 * * page 19 * * page 22 - page 23 * ----- | 1,2 | INV. H02M1/00 H02M3/335 H02J9/06 |
| X | US 2009/290387 A1 (WHEELER WILLIAM R [TW] ET AL) 26 novembre 2009 (2009-11-26) * figure 2 * * alinéa [0023] - alinéa [0033] * ----- | 1-10 | |
| X | US 2013/027981 A1 (LIU GANG [CN] ET AL) 31 janvier 2013 (2013-01-31) * figure 2 * * alinéa [0013] * * alinéa [0040] - alinéa [0041] * ----- | 1,2 | DOMAINES TECHNIQUES RECHERCHES (IPC) |
| A | | 3-10 | H02M H02J G06F |
| A | US 2007/041222 A1 (EGUCHI HIROYUKI [JP] ET AL) 22 février 2007 (2007-02-22) * figure 3 * ----- | 1-10 | |

Le présent rapport a été établi pour toutes les revendications

| Lieu de la recherche | Date d'achèvement de la recherche | Examinateur |
|---|---|---|
| La Haye | 13 janvier 2015 | Riehl, Philippe |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 14 18 1822

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-01-2015

| Document brevet cité au rapport de recherche | Date de publication | Membre(s) de la famille de brevet(s) | Date de publication |
|---|---|---|---|
| US 2009290387 A1 | 26-11-2009 | TW 200950296 A<br>US 2009290387 A1 | 01-12-2009<br>26-11-2009 |
| US 2013027981 A1 | 31-01-2013 | CN 102904437 A<br>TW 201306434 A<br>US 2013027981 A1 | 30-01-2013<br>01-02-2013<br>31-01-2013 |
| US 2007041222 A1 | 22-02-2007 | CN 1890864 A<br>DE 04819760 T1<br>EP 1858146 A1<br>JP 2005168167 A<br>KR 20060096468 A<br>US 2007041222 A1<br>WO 2005055407 A1 | 03-01-2007<br>08-10-2009<br>21-11-2007<br>23-06-2005<br>11-09-2006<br>22-02-2007<br>16-06-2005 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- FR 2983005